# EUROPEAN PATENT SPECIFICATION

(11) **EP 2 216 239 B1**
(45) Date of publication and mention of the grant of the patent: **19.08.2015**
(21) Application number: 09177344.0
(22) Date of filing: 27.11.2009
(51) Int. Cl.: B62J 15/00, B62J 37/00, F02M 25/08

(54) **Motorcycle**
Motorrad
Motocyclette

(30) Priority: 04.02.2009 JP 2009024082
(43) Date of publication of application: 11.08.2010
(73) Proprietor: Yamaha Hatsudoki Kabushiki Kaisha, Shizuoka-ken Shizuoka 438-8501 (JP)
(72) Inventor: Kitamura, Yu, Shizuoka-ken Shizuoka 438-8501 (JP)
(74) Representative: Zimmermann, Tankred Klaus

(56) References cited:
- EP-A2- 0 953 501
- JP-A- 4 372 484
- JP-U- 52 083 154
- JP-U- 53 131 121
- US-A1- 2007 089 922

## Description

### BACKGROUND OF THE INVENTION

### Field of the Invention

The present invention relates to motorcycles, and more specifically to a motorcycle including a canister that stores vaporized fuel gas.

### Description of the Background Art

There is a known motorcycle including a canister that stores vaporized fuel gas supplied from a fuel tank. For example, Japanese Patent No. 2992005 (application number JP 10-324281 A) discloses such a motorcycle including a canister.

Japanese Patent No. 2992005 discloses a scooter motorcycle. The motorcycle disclosed by Japanese Patent No. 2992005 includes a front frame and a side frame. The front frame is provided in the front part of the vehicle and extends downward. The side frame extends backward from the lower end of the front frame. The side frame is provided with a step floor for a rider to place his/her feet and a seat. The motorcycle is provided with a unit swing type engine. The unit swing type engine is attached swingably with the rear wheel under the back part of the side frame. The unit swing type engine provided in the scooter motorcycle is provided behind the front end of the seat.

The motorcycle disclosed by Japanese Patent No. 2992005 includes a fuel tank in the front part of the side frame. The fuel tank is provided at the feet of the rider. The canister is provided in the rear part of the side frame. The canister stores evaporated fuel gas supplied from the fuel tank.

While the scooter motorcycle is provided with the unit swing type engine, there is a known underbone motorcycle having an engine directly fixed to a frame. In the underbone motorcycle, components that swing with respect to the frame have reduced weight so that the traveling performance is improved.

The engine of the underbone motorcycle is provided ahead of the front end of the seat. Since the engine is provided in the front part, it is harder to get on and off the underbone motorcycle than the scooter motorcycle. It is desirable that the underbone motorcycle forms a concave space ahead of the seat and above the engine in order to make it easier for the rider to get on/off the vehicle. In the underbone motorcycle, the fuel tank is provided under the seat and a concave space is formed above the engine.

In the underbone motorcycle, for example, a canister as disclosed by Japanese Patent No. 2992005 is provided behind the fuel tank under the seat. However, the canister protrudes beyond the rear end of the seat, which makes it difficult to make the vehicle body compact. More specifically, the fuel tank is provided under the seat in order to form a concave space in front of the seat and above the engine, and therefore the canister cannot be provided in the manner as disclosed by Japanese Patent No. 2992005.

JP 52 083154 U describes a motorcycle according to the preamble of independent claim 1. JP 53 131121 U describes a motorcycle in which the canister is provided behind the fuel tank and behind the seat.

JP 43 72484 A describes an evaporated gas collecting device for a motor scooter mounted to a rack arranged on each side of a mud guard enclosing a part of a motorcycle rear wheel.

### SUMMARY OF THE INVENTION

It is an object of the invention to provide an improved motorcycle that has a compact body even when a canister is provided.

This object is achieved by a motorcycle according to claim 1.

The canister can be prevented from protruding behind the fuel tank. When the canister is provided, the body size in the front-back direction can be prevented from increasing. In other words, the vehicle body can be made compact.

Other features, elements, steps, characteristics and advantages of the present invention will become more apparent from the following detailed description of the preferred embodiments of the present invention with reference to the attached drawings.

### BRIEF DESCRIPTION OF THE DRAWINGS

Fig. 1 is a right side view of an entire structure of a motorcycle according to a preferred embodiment of the present invention.
Fig. 2 is a right side view of a structure of a periphery of a body frame in the motorcycle according to the preferred embodiment.
Fig. 3 is a left side view of a structure of a periphery of the body frame in the motorcycle according to the preferred embodiment.
Fig. 4 is a plan view of a structure of a periphery of a canister in the motorcycle according to the preferred embodiment.
Fig. 5 is a plan view of a rear fender included in the motorcycle according to the preferred embodiment.
Fig. 6 is a perspective view of the canister provided in the motorcycle according to the preferred embodiment.
Fig. 7 is a perspective view of the canister provided in the motorcycle according to the preferred embodiment.
Fig. 8 is a perspective view of a structure of a periphery of the canister in the motorcycle according to the preferred embodiment.
Fig. 9 is a perspective view of the rear fender included in the motorcycle according to the preferred embodiment.
Fig. 10 is a plan view of a fuel tank provided in the motorcycle according to the preferred embodiment.
Fig. 11 is a front sectional view of the motorcycle taken along line 200-200 in Fig. 1.

### DETAILED DESCRIPTION OF THE PREFERRED EMBODIMENTS

Now, a preferred embodiment of the present invention will be described with reference to the accompanying drawings. According to the present preferred embodiment, an underbone motorcycle 1 will be described as an example of the motorcycle according to the present invention. The underbone motorcycle has a frame (main frame) arranged at a low position between the seat and the handle. The rider can easily stride across the underbone motorcycle for the low frame position.

In the drawings, the arrow FWD refers to the forward direction in the advancing direction of the motorcycle 1. In the following description of the present preferred embodiment, the front-back and right-left directions refer to these directions in connection with the advancing direction of the vehicle unless otherwise specified. More specifically, in the following description, the forward direction viewed from a rider seated on the seat refers to the forward direction of the motorcycle, and the right or left direction viewed from a rider seated on the seat refers to the right or left direction of the motorcycle.

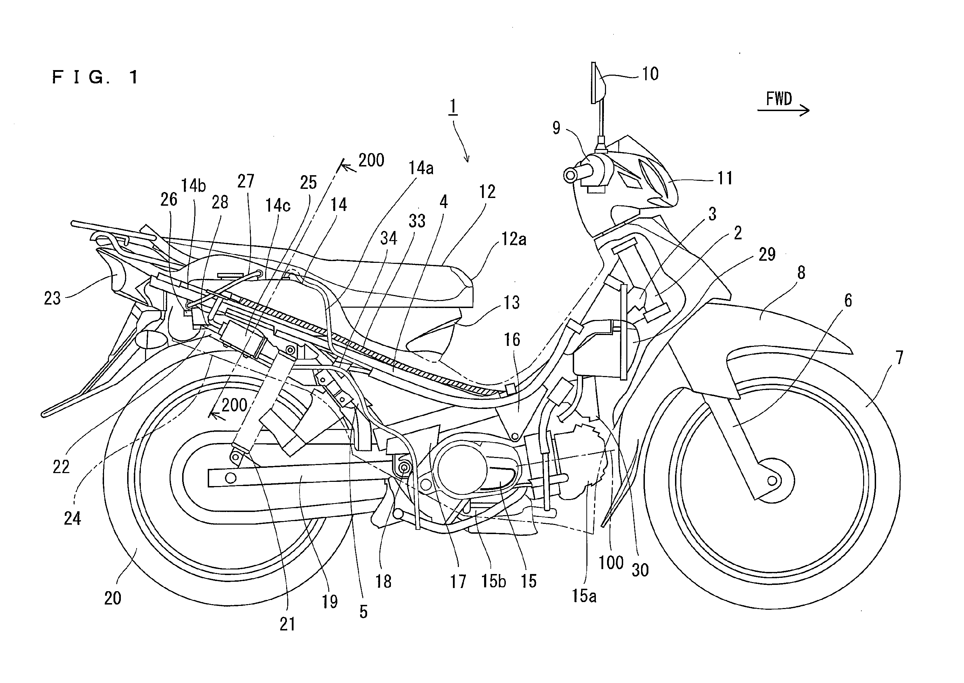

Fig. 1 is a right side view of the underbone motorcycle 1 according to the present preferred embodiment of the present invention. As shown in Fig. 1, a head pipe 2 is provided at the front part of the vehicle. A pair of front forks 6 is provided under the head pipe 2. A front wheel 7 is rotatably attached to the lower ends of the pair of front forks 6. A front fender 8 used to cover the upper part of the front wheel 7 is provided above the front wheel 7. A handle 9 is rotatably attached to the upper part of the head pipe 2. A back mirror 10 is attached to a side of the handle 9. A head light 11 is provided in front of the handle 9.

The engine 15 is provided under the main frame 3. The engine 15 includes a cylinder portion 15a. The cylinder axial line 100 of the cylinder portion 15a is inclined forward with respect to the vertical line. Support plates 16 and 17 are attached to the main frame 3. The engine 15 is supported at the main frame 3 as it is fixed to the support plates 16 and 17.

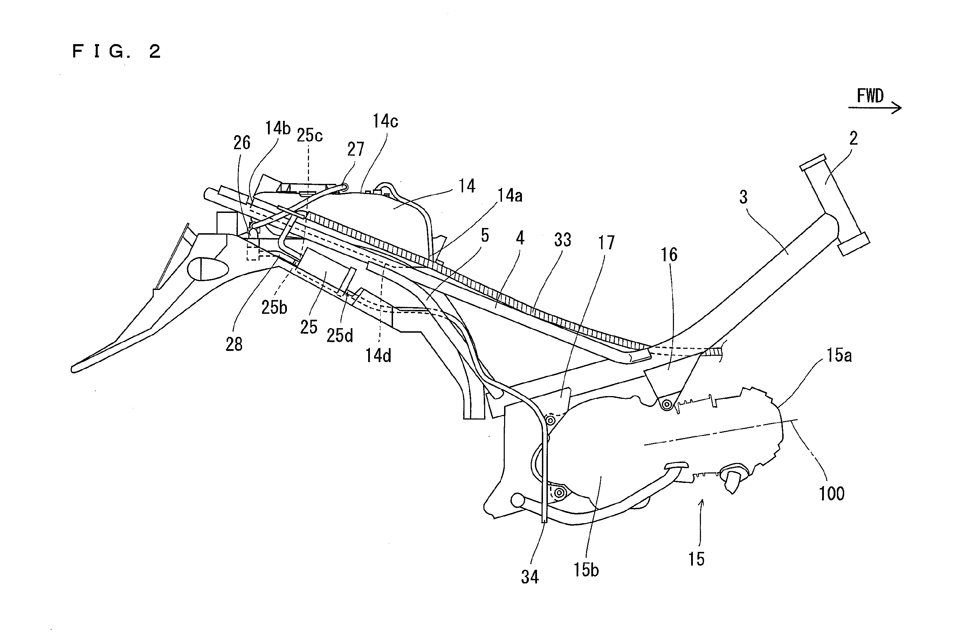

Fig. 2 is a right side view of a structure of a periphery of a body frame of the motorcycle 1. As shown in Fig. 2, the front end of the main frame 3 is connected to the rear part of the head pipe 2. The main frame 3 extends backward and downward. A seat frame 4 that extends backward and upward from the main frame 3 is attached to the main frame 3. A back frame 5 that extends backward and upward is attached to the rear end of the main frame 3. The rear end of the back frame 5 is connected to the seat frame 4. The main frame 3, the seat frame 4 and the back frame 5 form a "body frame" according to the present invention. The main frame 3 is an example of a "front frame" according to the present invention.

Referring back to Fig. 1, a seat 12 is provided above the seat frame 4. A storage box 13 used to store a baggage and the like and a fuel tank 14 are provided between the seat 12 and the seat frame 4. The fuel tank 14 is supported by the seat frame 4. The seat 12 is indirectly supported by the seat frame 4. The front end 14a of the fuel tank 14 is provided behind (opposite to the direction of the arrow FWD) the front end 12a of the seat 12.

The engine 15 is at least partly provided ahead of the front end 12a of the seat 12. More specifically, the cylinder portion 15a that emits the largest amount of heat in the engine 15 and a part of the crankcase 15b are provided ahead of the front end 12a of the seat 12.

As shown in Fig. 2, a canister 25 is provided under the fuel tank 14. The canister 25 is provided along the lower end surface 14d of the fuel tank 14 under the upper end surface 14c of the fuel tank 14. The canister 25 stores evaporated fuel gas supplied from the fuel tank 14 and guides the fuel gas to the engine 15 through a carburetor 30 (see Fig. 1) that will be described. The canister 25 is provided behind the front end 12a of the seat 12.

The canister 25 includes activated carbon particles (not shown). The activated carbon particles adsorb evaporated fuel gas supplied from the fuel tank 14 and coming into the canister 25. When the engine 15 is driven, negative pressure is generated as the piston (not shown) reciprocates in the cylinder portion 15a of the engine 15. The fuel gas adsorbed by the activated carbon particles in the canister 25 is discharged into the carburetor 30 by the generated negative pressure.

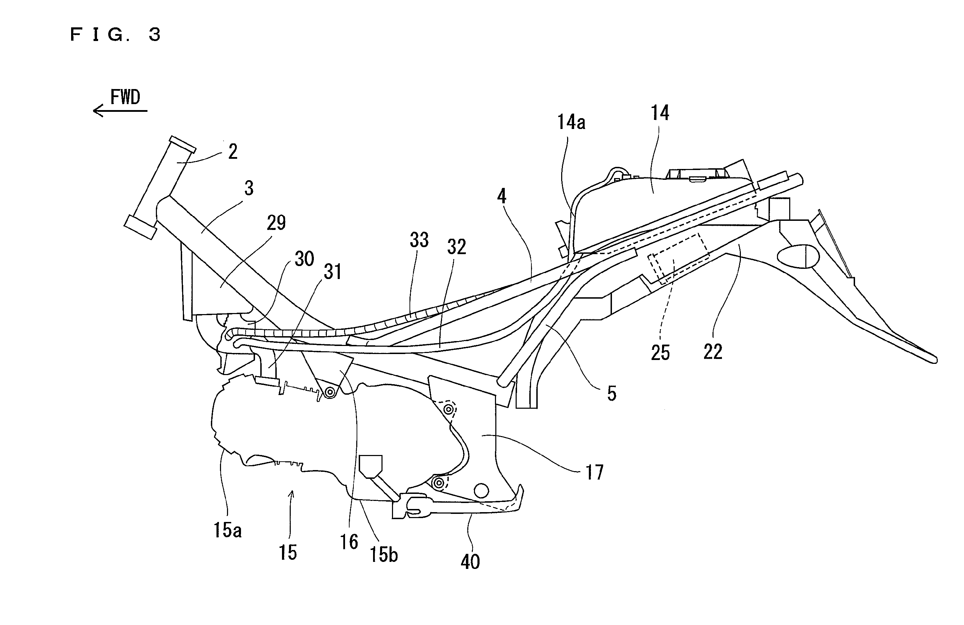

Fig. 3 is a left side view of a structure of a periphery of the body frame of the motorcycle 1. As shown in Fig. 3, an air cleaner 29 used to clean air that is sent into the engine 15 is provided behind the head pipe 2. The air cleaner 29 is connected with the carburetor 30 that supplies fuel to the engine 15. The carburetor 30 is an example of a "fuel supply device" according to the present invention. The carburetor 30 is provided ahead (in the direction of the arrow FWD) of the front end 12a of the seat 12 and under the canister 25 as shown in Fig. 1.

As shown in Fig. 3, an air inlet pipe 31 arranged to connect the carburetor 30 and the engine 15 is provided between the carburetor 30 and the engine 15. A rubber supply hose 32 used to supply fuel from the fuel tank 14 is connected to the carburetor 30.

As shown in Fig. 1, a pivot axis 18 is provided at the support plate 17 connected to the main frame 3. The front end of the rear arm 19 is supported by the pivot axis 18 and the rear arm 19 can swing in the vertical direction. The rear wheel 20 is rotatably provided at the rear end of the rear arm 19. The rear arm 19 is supported by the seat frame 4 through the rear cushion member 21.

As shown in Fig. 1, a rear fender 22 used to prevent the splashing of mud or pebbles by the rear wheel 20 during traveling are provided under the seat 12. A tail lamp 23 is attached at the rear part of the rear fender 22. A side cover 24 is attached to cover a side of the rear fender 22. The fuel tank 14 is provided above the rear fender 22.

As shown in Fig. 2, a rollover valve 26 is provided between the fuel tank 14 and the canister 25. The rollover valve 26 shuts the flow path for fuel from the fuel tank 14 to the canister 25 to prevent the liquid fuel from coming into the canister 25 when the motorcycle 1 is rolled over. The rollover valve 26 is an example of an "inflow control valve" according to the present invention. The rollover valve 26 is provided behind and above the canister 25. The rollover valve 26 is provided under the upper end surface 14c of the fuel tank 14 and above a charge port 25b of the canister 25.

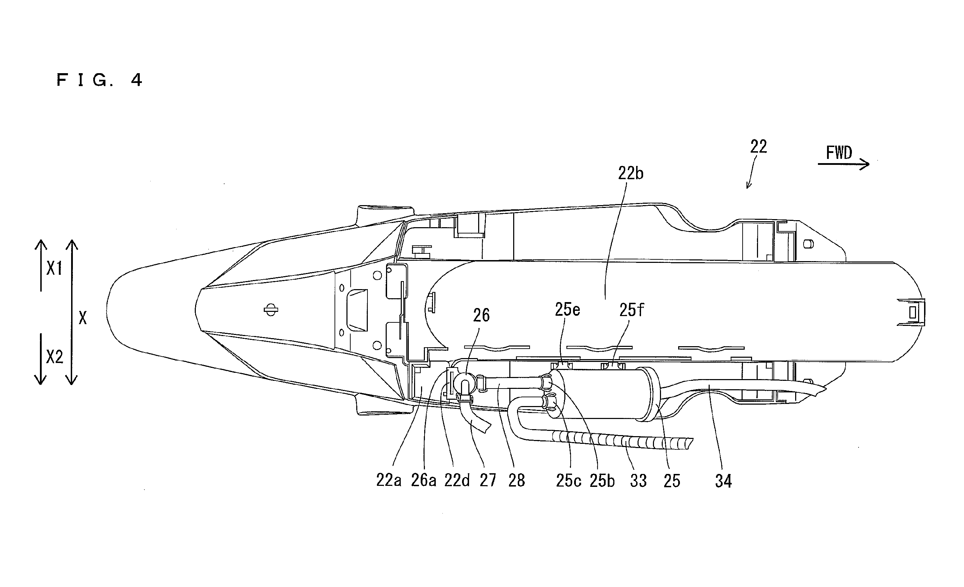

Fig. 4 is a plan view of a structure of a periphery of the canister 25. As shown in Fig. 4, a purge port 25c of the canister 25 is connected with one end of a rubber purge hose 33 used to connect the canister 25 and the carburetor 30. The purge hose 33 is an example of a "fuel supply pipe" according to the present invention. Fuel gas supplied from the fuel tank 14 and adsorbed by the activated carbon particles in the canister 25 is supplied to the carburetor 30 through the purge hose 33. The fuel gas adsorbed and stored in the activated carbon particles in the canister 25 is sucked into the carburetor 30 through the purge hose 33 by negative pressure generated when the engine 15 is driven. The fuel gas sucked into the carburetor 30 is discharged into the engine 15.

As shown in Fig. 2, the purge hose 33 is arranged to extend upward from the purge port 25c of the canister 25 and then downward along the seat frame 4 toward the front.

As shown in Figs. 2 and 4, the release port 25d of the canister 25 is connected with one end of a rubber release hose 34. As shown in Fig. 2, the release hose 34 extends to the bottom of the engine 15. The release hose 34 serves to let the space in the canister open to the air in order to prevent negative pressure from being generated in the canister 25. The release hose 34 also serves to prevent incoming liquid fuel into the canister 25 from adhering to the vehicle body.

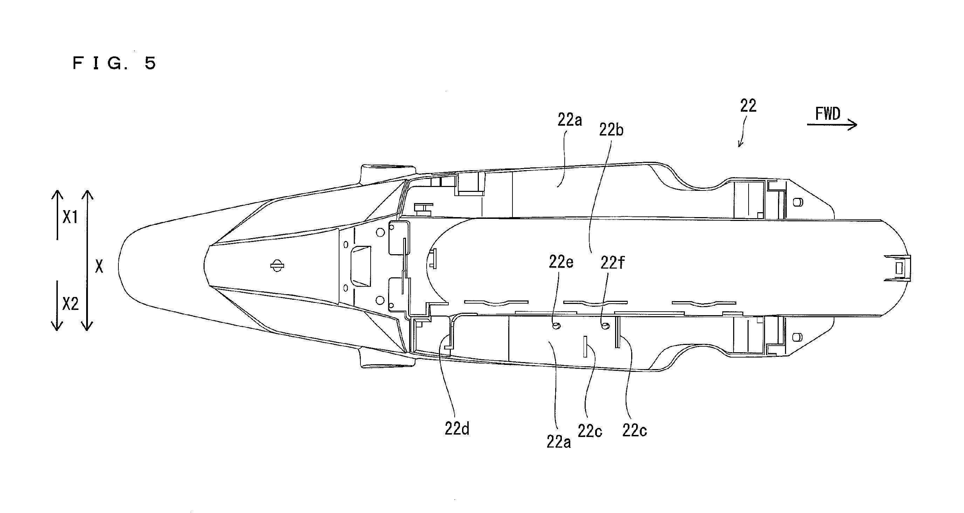

Fig. 5 is a plan view of the rear fender 22. The rear fender 22 has right and left inclined surfaces 22a. The inclined surfaces 22a are each inclined forward and downward. As shown in Fig. 5, the inclined surface 22a in the rear fender 22 has two integrally formed ribs, a positioning rib 22c and an attachment rib 22d. The positioning rib 22c is provided to position the canister 25. The attachment rib 22d is provided to attach the rollover valve 26. The inclined surface 22a in the rear fender 22 is provided with attachment holes 22e and 22f used to attach the canister 25.

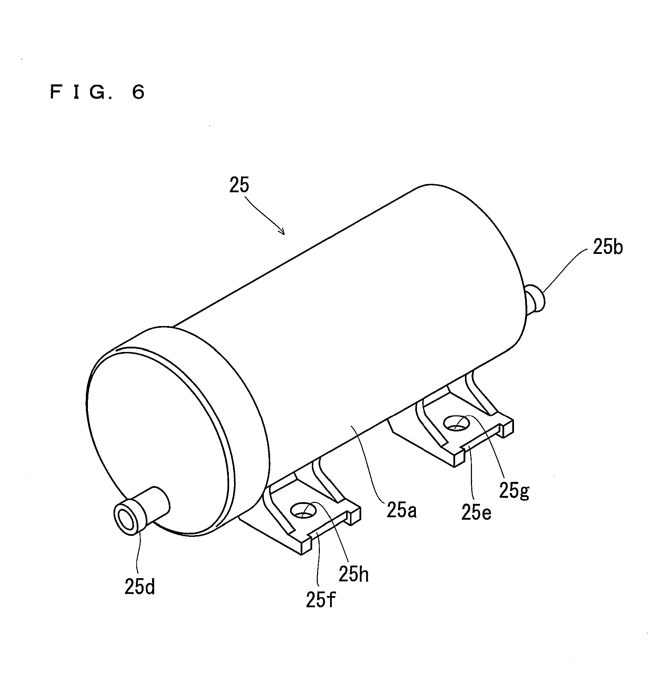

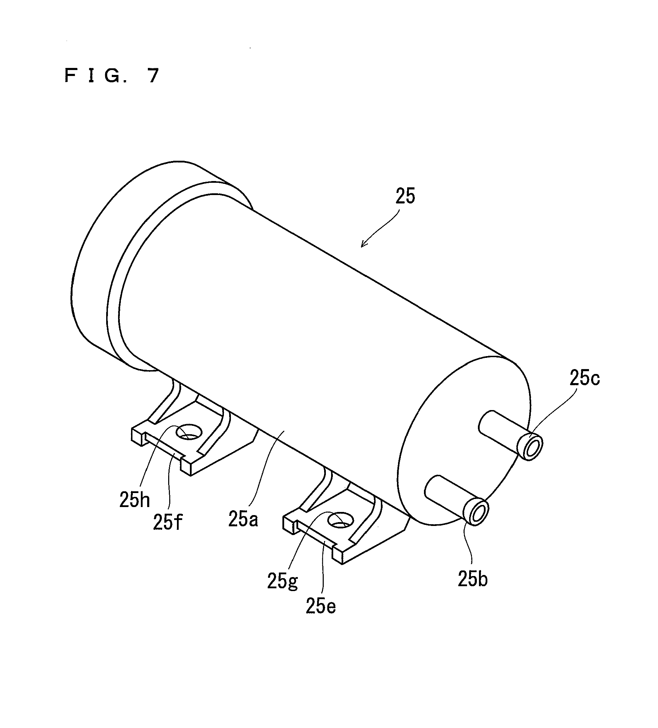

Figs. 6 and 7 are perspective views of the canister 25. As shown in Figs. 6 and 7, the canister 25 has a body case 25a that includes activated carbon particles used to adsorb fuel gas supplied from the fuel tank 14. As shown in Fig. 7, the body case 25a includes the charge port 25b arranged to take in fuel gas and the purge port 25c arranged to guide the fuel gas in the body case 25a to the carburetor 30. As shown in Fig. 6, the body case 25a is provided with a release port 25d used to prevent negative pressure from being generated in the body case 25a.

The body case 25a of the canister 25 includes attachment mounts 25e and 25f used to attach the canister 25 to the rear fender 22. The attachment mounts 25e and 25f are provided with attachment holes 25g and 25h.

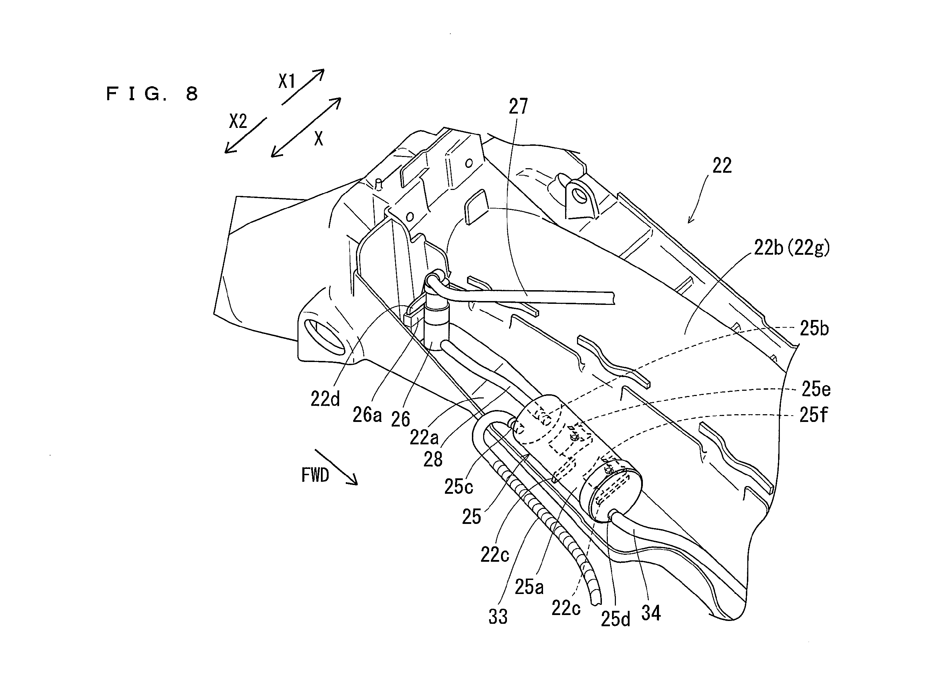

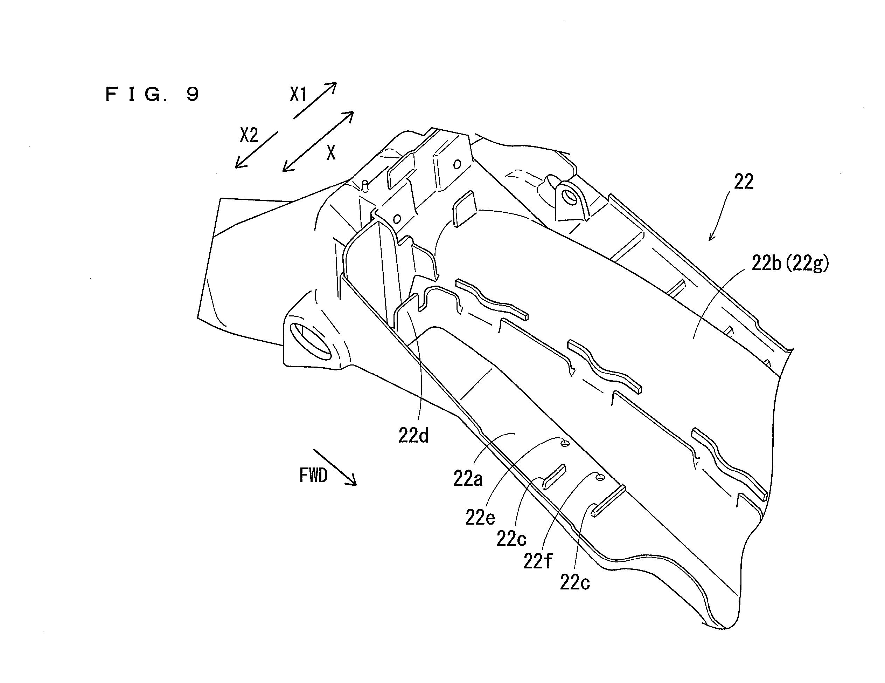

Fig. 8 is a perspective view of a rear part of the motorcycle 1 showing a structure of a periphery of the canister 25. Fig. 9 is a perspective view of the rear fender. As shown in Fig. 8, the canister 25 is attached to the inclined surface 22a of the fear fender 22.

The canister 25 is provided so that the charge port 25b and the purge port 25c are provided at its back side and the release port 25d is provided at its front side. More specifically, the charge port 25b and the purge port 25c are provided on the rear side of the canister 25 inclined forward. The release port 25d is provided on the front side of the canister 25 inclined forward. The charge port 25b is an example of an "input port" according to the present invention and the purge port 25c is an example of an "output port" according to the present invention. The release port 25d is an example of a "discharge port" according to the present invention.

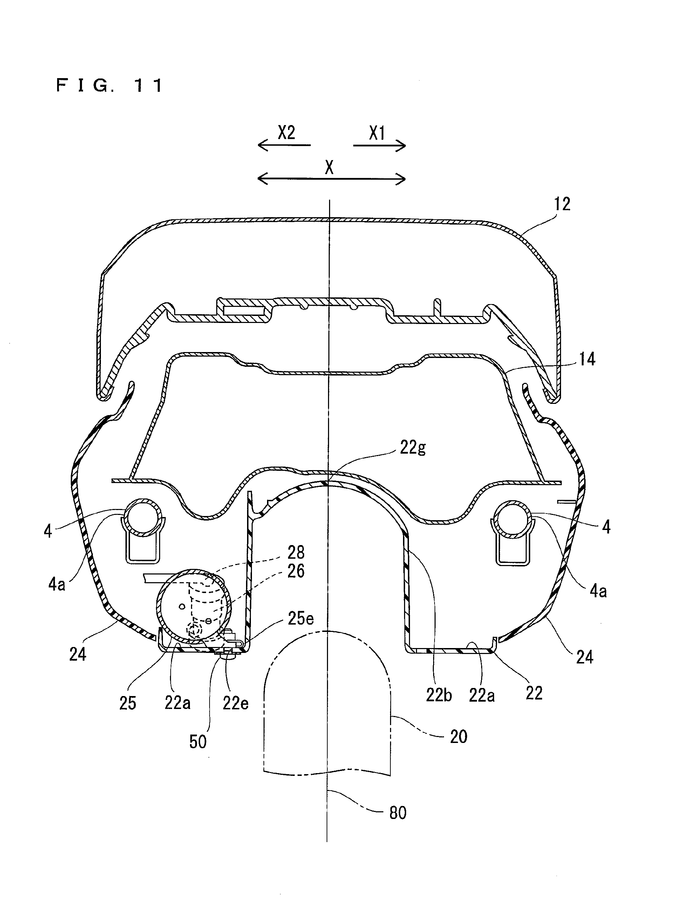

As shown in Fig. 8, the canister 25 is positioned as the attachment mounts 25e and 25f are abutted against the two positioning ribs 22c formed at the inclined surface 22a. While the attachment mounts 25e and 25f are positioned, the positions of the attachment holes 25g and 25h of the canister 25 are matched to the positions of the attachment holes 22e and 22f of the rear fender 22. When a bolt 50 (see Fig. 11) is tightened as the attachment holes are thus registered, the canister 25 is fixed to the rear fender 22. In this way, the canister 25 is attached as it is inclined forward along the inclined surface 22a formed at the rear fender 22.

According to the present preferred embodiment, the canister 25 is positioned between the front end 14a and the rear end 14b of the fuel tank 14 behind (opposite to the direction of the arrow FWD) the front end 12a of the seat 12 as shown in Fig. 1.

As shown in Fig. 8, the rollover valve 26 has an attachment portion 26a inserted into the attachment rib 22d of the fender 22. The insertion of the attachment portion 26a into the attachment rib 22d allows the rollover valve 26 to be attached to the rear fender 22.

As shown in Figs. 2 and 8, a rubber charge hose 27 used to connect the fuel tank 14 and the rollover valve 26 is provided between the fuel tank 14 and the rollover valve 26. A rubber charge hose 28 is provided between the rollover valve 26 and the canister 25. The charge hose 28 is connected to the charge port 25b of the canister 25.

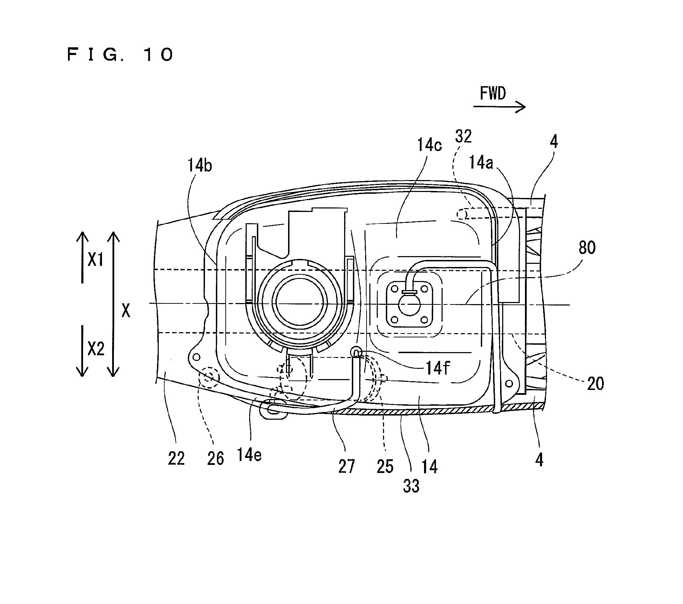

Fig. 10 is a plan view of the fuel tank 14. As shown in Fig. 10, the canister 25 is provided on the inner side than the outermost part of the fuel tank 14 on the both sides in the widthwise direction (X-direction). More specifically, according to the present preferred embodiment, the canister 25 is provided on the inner side than a flange 14e provided at the edge of the fuel tank 14. The canister 25 is provided to overlap the fuel tank 14 when seen in a plan view.

As shown in Fig. 10, a ventilation port 14f is provided at the upper end surface 14c of the fuel tank 14. The charge hose 27 is connected to the ventilation port 14f.

As shown in Figs. 2 and 8, the charge hose 27 is arranged to extend backward and downward from the ventilation port 14f provided at the upper end surface 14c of the fuel tank 14 and connected to the rollover valve 26. More specifically, the input port of the rollover valve 26 is positioned under the ventilation port 14f of the fuel tank 14. The charge hose 28 is arranged to extend forward and downward from the output port of the rollover valve 26 and connected to the canister 25. More specifically, the charge port 25b of the canister 25 is positioned under the output port of the rollover valve 26.

As shown in Fig. 10, according to the present preferred embodiment, the ventilation port 14f is provided on the right side of the vehicle (in the direction of the arrow X2). The side stand 40 (see Fig. 3) of the motorcycle 1 is provided on the left side of the vehicle. Since the side stand 40 is provided on the left side of the vehicle, the vehicle is inclined to the left when it is stopped. The ventilation port 14f is provided on the right side of the vehicle, fuel does not overflow from the ventilation port 14f when the vehicle is inclined. The canister 25 and the rollover valve 26 are provided on the right side of the vehicle, the length of the charge hose 27 can be reduced. More specifically, the canister 25 is provided on the opposite side to the side provided with the side stand 40, so that piping process for the charge hose is alleviated.

According to the present preferred embodiment, the charge hose 27, the rollover valve 26, the charge hose 28, the canister 25 and the purge hose 33 are connected and assembled, and then they are mounted on the seat frame 4 and the rear fender 22. When these components are separately assembled in the rear fender 22 and the seat frame 4, the operation of removing the rear fender 22 or the like becomes complicated. The maintenance is improved by handling these components after they are assembled.

Fig. 11 is a sectional view of the rear part of the motorcycle 1. Fig. 11 is a sectional view taken along line 200-200 in Fig. 1. As shown in Fig. 11, the rear fender 22 includes the right and left inclined surfaces 22a and a central concave portion 22b. The concave portion 22b extends upward as it avoids the rear wheel 20.

The central surface 80 shown in Figs. 10 and 11 passes through the center of the rear wheel 20 with respect to the widthwise direction of the vehicle. The canister 25 is provided more on the right side (in the direction of the arrow X2) than the central surface 80. Stated differently, the canister 25 is provided on the right side so that it does not overlap the central surface 80.

The rear fender 22 has the concave portion 22b in the center in the widthwise direction of the vehicle. As shown in Fig. 11, the canister 25 is provided on the right side of the concave portion 22b of the rear fender 22 and at the inclined surface 22a under the upper end 22g of the concave portion 22b. The canister 25 is provided at the inclined surface 22a on the right side avoiding the central concave portion 22b, so that the height of the vehicle can be kept from increasing.

As shown in Fig. 11, the canister 25 is attached to the rear fender 22 as it is arranged on the inner side than the outer side surface 4a of the seat frame 4. The rollover valve 26 is attached to the rear fender 22 as it is provided on the inner side than the outside surface 4a of the seat frame 4.

As in the foregoing, the motorcycle according to present preferred embodiment includes the canister 25 that stores evaporated fuel gas supplied from the fuel tank 14 and supplies the stored fuel gas to the engine 15. The canister 25 is provided to at least partly overlap the fuel tank 14 behind the front end 12a of the seat 12 when seen in a plan view. In the motorcycle 1 having the fuel tank 14 positioned behind the front end 12a of the seat 12, the canister 25 can be provided behind the front end 12a of the seat 12 while the vehicle size can be prevented from increasing. The fuel tank 14 is positioned behind the front end 12a of the seat 12, so that a concave space can be formed above the engine 15. This makes it easier for the rider to get on/off the vehicle.

As in the foregoing, the engine 15 is provided at least partly ahead of the front end 12a of the seat 12 and the canister 25 is provided behind the front end 12a of the seat 12. The canister 25 can be provided away from the engine 15 that emits heat, so that the canister 25 can be less affected by heat from the engine 15.

The motorcycle according to the present preferred embodiment includes the rear fender 22 provided to cover the rear wheel 20 from above and support the canister 25 and the fuel tank 14 from below. The rear fender 22 includes the inclined surface 22a inclined forward and downward, the canister 25 is provided as it is inclined along the inclined surface 22a. Liquid fuel is sometimes stored in the canister 25, but the amount of liquid fuel to remain in the canister 25 can be reduced because the canister 25 is inclined. The inclined surface 22a formed at the rear fender 22 is used as it is and therefore the inclination arrangement of the canister 25 can be formed less costly.

According to the present preferred embodiment, the rear fender 22 includes a concave portion 22b that extends upward to avoid the rear wheel 20 above the rear wheel 20 and the inclined surface 22a is provided at a side of the concave portion 22b with respect to the widthwise direction of the vehicle. The rear fender 22 is provided with the canister 25 and still the height of the vehicle can be kept from increasing.

According to the present preferred embodiment, the charge port 25b is provided at the rear side of the canister 25 inclined forward. This alleviates piping to the fuel tank 14 provided above the canister 25.

According to the present preferred embodiment, the release port 25d is provided on the front side of the canister 25 inclined forward. This makes it easier to provide a release hose extending downward.

According to the present preferred embodiment, the positioning rib 22c used to position the canister 25 is integrally provided to the inclined surface 22a. In this way, the canister 25 can be fixed with a reduced number of parts.

According to the present preferred embodiment, the canister 25 is provided so that it does not overlap the central surface of the rear wheel 20 with respect to the widthwise direction of the vehicle when seen in a plan view. As the canister is shifted from the rear wheel 20 in this way, the height of the vehicle body can be prevented from increasing because of the attached canister 25.

According to the present preferred embodiment, the canister 25 is provided at the inclined surface 22a opposite to the stand with respect to the widthwise direction of the motorcycle 1. The ventilation port 14f of the fuel tank 14 is provided on the opposite side to the inclined side of the vehicle. The ventilation port 14f of the fuel tank 14 is closely positioned to the canister 25, so that the length of the pipe can be shortened.

According to the present preferred embodiment, the canister 25 is provided between the front end 14a and the rear end 14b of the fuel tank 14. The length of the vehicle can be prevented from increasing when the canister 25 is provided.

According to the present preferred embodiment, the carburetor 30 arranged to supply fuel to the engine 15 is provided ahead of the front end 12a of the seat 12 and under the canister 25. The canister 25 and the carburetor 30 are connected by the purge hose 33 arranged to send fuel gas from the canister 25 to the carburetor 30. The purge hose 33 extends at a downward incline. In this way, evaporated fuel can be prevented from remaining in the supply pipe extended from the canister 25 to the carburetor 33.

According to the present preferred embodiment, the canister 25 includes the purge port 25c connected to the purge hose 33 and the purge port 25c of the canister 25 is provided on the rear side of the canister 25. The purge port 25c can be set in a high position, so that the pipe connected to the carburetor 30 can be inclined downward entirely. When liquid fuel is stored in the canister 25, the liquid fuel can be kept from being flowed from the purge port 25c.

According to the present preferred embodiment, the rollover valve 26 is provided in the path from the fuel tank 14 to the canister 25 to release tank pressure and prevent liquid fuel from coming into the canister 25 from the fuel tank 14 when the vehicle is rolled over. The input port of the rollover valve 26 is provided under the ventilation port 14f of the fuel tank 14, and the charge port 25b of the canister 25 is provided under the output port of the rollover valve 26. Liquefied fuel can be prevented from remaining in the pipes connecting the fuel tank 14 and the rollover valve 26 and the rollover valve 26 and the canister 25.

According to the present preferred embodiment, the rollover valve 26 is attached to the rear fender 22. The number of parts can be reduced because no special member is used to provide the rollover valve 26.

According to the present preferred embodiment, the attachment rib 22d used to attach the rollover valve 26 is integrally provided to the rear fender 22. The number of parts can be reduced because no special member is used to provide the rollover valve 26.

According to the present preferred embodiment, the canister 25 and the rollover valve 26 are provided on the inner side than the outer surface of the seat frame 4. When the motorcycle 1 is rolled over, the canister 25 and the rollover valve 26 can be protected. The rear fender 22 can be prevented from increasing in size in the widthwise direction because of the canister 25 and the rollover valve 26.

According to the present preferred embodiment, the underbone motorcycle having a main frame whose height is small is used as an example of the motorcycle. The present invention is not limited to the type of the motorcycle but can be applied to other motorcycles such as a scooter motorcycle that include a canister used to store evaporated fuel gas supplied from a fuel tank.

According to the present preferred embodiment, the canister is provided behind the front end of the seat and between the front end and the rear end of the fuel tank as an example. The present invention is not limited to the arrangement and the canister can be provided ahead of the front end of the fuel tank if the position is behind the front end of the seat.

According to the present preferred embodiment, the canister is provided under the upper end surface of the fuel tank and along the lower surface of the fuel tank as an example. The present invention is not limited to the arrangement and the canister may be provided in a position such as in a storage box as long as the position is behind the front end of the seat and ahead of the rear end of the fuel tank.

According to the present preferred embodiment, the rollover valve is provided between the fuel tank and the canister as an example. The present invention is not limited to the arrangement and the fuel tank and the canister can be connected directly by a charge hose without providing the rollover valve.

According to the present preferred embodiment, the rollover valve is attached as it is inserted to the attachment rib provided at the rear fender. The present invention is not limited to the arrangement and methods other than the insertion to the attachment rib such as screw-bolting using a bolt may be employed to attach the rollover valve to the rear fender.

According to the present preferred embodiment, the carburetor is described as an example of the fuel supply device, but the present invention is not limited to the example and an injector used to supply fuel to the engine by electronic control may be used. In this case, the purge hose is connected to an air inlet pipe in the periphery of the injector.

According to the present preferred embodiment, the canister is inclined forward and obliquely downward as an example. The present invention is not limited to the arrangement, and the canister may be arranged in the vertical direction so that the release port is positioned at the lower surface.

## Claims

1. A motorcycle (1), comprising:
a head pipe (2);
a body frame connected to the head pipe (2) and including a front frame (3) extending backward and downward from the head pipe (2) and a seat frame (4) extending backward and upward from the front frame (3);
a seat (12) supported at the seat frame (4);
an engine (15) supported at the body frame and having at least a part provided ahead of a front end (12a) of the seat (12);
a fuel tank (14) arranged above the seat frame (4) and having a front end (14a) provided behind the front end (12a) of the seat (12); and
a canister (25) connected to the fuel tank (14) to store evaporated fuel gas supplied from the fuel tank (14) and supply the stored fuel gas to the engine (15);
wherein the canister (25) is provided under the fuel tank (14) and the canister (25) does not overlap a central surface (80) of a rear wheel (20) with respect to a widthwise direction (X) of the motorcycle (1) when seen in a plan view;
**characterized in that**
the canister (25) is located on an inner side than the outermost part (14e) of the fuel tank (14) on the both sides in the widthwise direction (X) of the motorcycle (1), and
the canister (25) has at least a part overlapping the fuel tank (14) behind the front end (12a) of the seat (12) when seen in the plan view.

2. The motorcycle (1) according to claim 1, further comprising:
a rear fender (22) provided to cover the rear wheel (20) from above and support the canister (25) and the fuel tank (14) from below,
the rear fender (22) including an inclined surface (22a) extending forward and downward, and
the canister (25) being provided inclined along the inclined surface (22a).

3. The motorcycle (1) according to claim 2, wherein the rear fender (22) comprises a concave portion (22b) extending upward above the rear wheel (20), and
the inclined surface (22a) is provided at a side of the concave portion (22b) with respect to the widthwise direction (X) of the motorcycle (1).

4. The motorcycle (1) according to claim 2 or 3, wherein an input port (25b) of the canister (25) is provided on a rear side of the canister (25).

5. The motorcycle (1) according to any one of claims 2 to 4, wherein a discharge port (25d) of the canister (25) is provided on a front side of the canister (25).

6. The motorcycle (1) according to any one of claims 2 to 5, wherein a positioning rib (22c) used to position the canister (25) is integrally provided at the inclined surface (22a).

7. The motorcycle (1) according to any one of claims 2 to 6, wherein the canister (25) is provided at the inclined surface (22a) opposite to a stand (40) with respect to the widthwise direction (X) of the motorcycle (1).

8. The motorcycle (1) according to any one of claims 2 to 7, wherein the canister (25) is provided between the front end (14a) and the rear end (14b) of the fuel tank (14).

9. The motorcycle (1) according to any one of claims 1 to 8, further comprising:
a fuel supply device (30) provided ahead of the front end (12a) of the seat (12) and under the canister (25) to supply fuel to the engine (15); and
a fuel supply pipe (33) arranged to connect the canister (25) and the fuel supply device (30) and supply fuel gas supplied from the canister (25) to the fuel supply device (30),
the fuel supply pipe (33) extending forward and downward.

10. The motorcycle (1) according to claim 9, wherein the canister (25) comprises an output port (25c) connected to the fuel supply pipe (33), and
the output port (25c) of the canister (25) is provided on a rear side of the canister (25).

11. The motorcycle (1) according to claim 1, further comprising an inflow control valve (26) provided in a ventilation path that connects the fuel tank (14) and the canister (25) to prevent liquid fuel from coming into the canister (25) from the fuel tank (14) when the motorcycle (1) is rolled over,
an input port of the inflow control valve (26) being provided under a ventilation port (14f) of the fuel tank (14),
an input port (25b) of the canister (25) being provided under an output port of the inflow control valve (26).

12. The motorcycle (1) according to claim 2, further comprising an inflow control valve (26) provided in a ventilation path that connects the fuel tank (14) and the canister (25) to prevent liquid fuel from coming into the canister (25) from the fuel tank (14) when the motorcycle (1) is rolled over,
an input port of the inflow control valve (26) being provided under a ventilation port (14f) of the fuel tank (14),
an input port (25b) of the canister (25) being provided under an output port of the inflow control valve (26),
wherein the inflow control valve (26) is attached to the rear fender (22).

13. The motorcycle (1) according to claim 12, wherein the rear fender (22) is integrally provided with an attachment rib (22d) used to attach the inflow control valve (26).

14. The motorcycle (1) according to any one of claims 11 to 13, wherein the canister (25) and the inflow control valve (26) are provided on an inner side than an outer surface (4a) of the seat frame (4).

## Patentansprüche

1. Ein Motorrad (1), das folgende Merkmale aufweist:
eine Hauptleitung (2);
einen Karosserierahmen, der mit der Hauptleitung (2) verbunden ist und einen vorderen Rahmen (3), der sich von der Hauptleitung (2) aus nach hinten und nach unten erstreckt, und einen Sitzrahmen (4), der sich von dem vorderen Rahmen (3) aus nach hinten und nach oben erstreckt, umfasst;
einen an dem Sitzrahmen (4) getragenen Sitz (12);
einen Motor (15), der an dem Karosserierahmen getragen wird und zumindest einen Teil aufweist, der vor einem vorderen Ende (12a) des Sitzes (12) vorgesehen ist;
einen Kraftstofftank (14), der über dem Sitzrahmen (4) angeordnet ist und ein vorderes Ende (14a) aufweist, das hinter dem vorderen Ende (12a) des Sitzes (12) vorgesehen ist; und
einen Kanister (25), der mit dem Kraftstofftank (14) verbunden ist, um verdampftes Kraftstoffgas zu speichern, das von dem Kraftstofftank (14) zugeführt wird, und um dem Motor (15) das gespeicherte Kraftstoffgas zuzuführen;
wobei der Kanister (25) unter dem Kraftstofftank (14) vorgesehen ist und der Kanister (25) in einer Draufsicht betrachtet eine zentrale Oberfläche (80) eines Hinterrads (20) bezüglich einer Breitenrichtung (X) des Motorrads (1) nicht überdeckt;
**dadurch gekennzeichnet, dass**
sich der Kanister (25) auf einer Seite befindet, die weiter innen liegt als der äußerste Teil (14e) des Kraftstofftanks (14) auf den beiden Seiten in der Breitenrichtung (X) des Motorrads (1), und
der Kanister (25) zumindest einen Teil aufweist, der den Kraftstofftank (14) hinter dem vorderen Ende (12a) des Sitzes (12) in der Draufsicht betrachtet überdeckt.

2. Das Motorrad (1) gemäß Anspruch 1, das ferner folgende Merkmale aufweist:
einen Heckkotflügel (22), der dazu vorgesehen ist, das Hinterrad (20) von oben abzudecken und den Kanister (25) und den Kraftstofftank (14) von unten zu tragen,
wobei der Heckkotflügel (22) eine geneigte Oberfläche (22a) umfasst, die sich nach vorne und nach unten erstreckt, und
wobei der Kanister (25) entlang der geneigten Oberfläche (22a) geneigt vorgesehen ist.

3. Das Motorrad (1) gemäß Anspruch 2, bei dem der Heckkotflügel (22) einen konkaven Abschnitt (22b) aufweist, der sich über dem Hinterrad (20) nach oben erstreckt, und
die geneigte Oberfläche (22a) auf einer Seite des konkaven Abschnitts (22b) bezüglich der Breitenrichtung (X) des Motorrads (1) vorgesehen ist.

4. Das Motorrad (1) gemäß Anspruch 2 oder 3, bei dem eine Eingangsöffnung (25b) des Kanisters (25) auf einer Rückseite des Kanisters (25) vorgesehen ist.

5. Das Motorrad (1) gemäß einem der Ansprüche 2 bis 4, bei dem eine Auslassöffnung (25d) des Kanisters (25) auf einer Vorderseite des Kanisters (25) vorgesehen ist.

6. Das Motorrad (1) gemäß einem der Ansprüche 2 bis 5, bei dem ein Positionierungssteg (22c), der zum Positionieren des Kanisters (25) verwendet wird, auf integrierte Weise an der geneigten Oberfläche (22a) vorgesehen ist.

7. Das Motorrad (1) gemäß einem der Ansprüche 2 bis 6, bei dem der Kanister (25) an der geneigten Oberfläche (22a) gegenüber einem Ständer (40) bezüglich der Breitenrichtung (X) des Motorrads (1) vorgesehen ist.

8. Das Motorrad (1) gemäß einem der Ansprüche 2 bis 7, bei dem der Kanister (25) zwischen dem vorderen Ende (14a) und dem hinteren Ende (14b) des Kraftstofftanks (14) vorgesehen ist.

9. Das Motorrad (1) gemäß einem der Ansprüche 1 bis 8, das ferner folgende Merkmale aufweist:
eine Kraftstoffzufuhrvorrichtung (30), die vor dem vorderen Ende (12a) des Sitzes (12) und unter dem Kanister (25) vorgesehen ist, um dem Motor (15) Kraftstoff zuzuführen; und
ein Kraftstoffzufuhrrohr (33), das dazu angeordnet ist, den Kanister (25) und die Kraftstoffzufuhrvorrichtung (30) zu verbinden und der Kraftstoffzufuhrvorrichtung (30) Kraftstoffgas zuzuführen, das von dem Kanister (25) zugeführt wird,
wobei sich das Kraftstoffzufuhrrohr (33) nach vorne und nach unten erstreckt.

10. Das Motorrad (1) gemäß Anspruch 9, bei dem der Kanister (25) eine mit dem Kraftstoffzufuhrrohr (33) verbundene Ausgangsöffnung (25c) aufweist, und
die Ausgangsöffnung (25c) des Kanisters (25) auf einer Rückseite des Kanisters (25) vorgesehen ist.

11. Das Motorrad (1) gemäß Anspruch 1, das ferner ein Einströmungssteuerventil (26) aufweist, das in einem Lüftungspfad vorgesehen ist,der den Kraftstofftank (14) und den Kanister (15) verbindet, um zu verhindern, dass flüssiger Kraftstoff aus dem Kraftstofftank (14) in den Kanister (25) gelangt, wenn das Motorrad (1) umfällt,
wobei eine Eingangsöffnung des Einströmungssteuerventils (26) unter einer Lüftungsöffnung (14f) des Kraftstofftanks (14) vorgesehen ist,
wobei eine Eingangsöffnung (25b) des Kanisters (25) unter einer Ausgangsöffnung des Einströmungssteuerventils (26) vorgesehen ist.

12. Das Motorrad (1) gemäß Anspruch 2, das ferner ein Einströmungssteuerventil (26) aufweist, das in einem Lüftungspfad vorgesehen ist,der den Kraftstofftank (14) und den Kanister (15) verbindet, um zu verhindern, dass flüssiger Kraftstoff aus dem Kraftstofftank (14) in den Kanister (25) gelangt, wenn das Motorrad (1) umfällt,
wobei eine Eingangsöffnung des Einströmungssteuerventils (26) unter einer Lüftungsöffnung (14f) des Kraftstofftanks (14) vorgesehen ist,
wobei eine Eingangsöffnung (25b) des Kanisters (25) unter einer Ausgangsöffnung des Einströmungssteuerventils (26) vorgesehen ist,
wobei das Einströmungssteuerventil (26) an dem Heckkotflügel (22) befestigt ist.

13. Das Motorrad (1) gemäß Anspruch 12, bei dem der Heckkotflügel (22) auf integrierte Weise mit einem Befestigungssteg (22d) versehen ist, der zum Befestigen des Einströmungssteuerventils (26) verwendet wird.

14. Das Motorrad (1) gemäß einem der Ansprüche 11 bis 13, bei dem der Kanister (25) und das Einströmungssteuerventil (26) auf einer Seite vorgesehen sind, die weiter innen liegt als eine Außenoberfläche (4a) des Sitzrahmens (4).

## Revendications

1. Motocyclette (1), comprenant:
un tuyau de tête (2);
un châssis de carrosserie connecté au tuyau de tête (2) et comportant un châssis avant (3) s'étendant vers l'arrière et vers le bas depuis le tuyau de tête (2) et un châssis de siège (4) s'étendant vers l'arrière et vers le haut depuis le châssis avant (3);
un siège (12) supporté sur le châssis de siège (4);
un moteur (15) supporté sur le châssis de carrosserie et présentant au moins une partie prévue en avant d'une extrémité avant (12a) du siège (12);
un réservoir de carburant (14) disposé au-dessus du châssis de siège (4) et présentant une extrémité avant (14a) prévue derrière l'extrémité avant (12a) du siège (12); et
un bidon (25) connecté au réservoir de carburant (14) pour stocker le gaz combustible évaporé alimenté par le réservoir de carburant (14) et pour alimenter le gaz combustible stocké vers le moteur (15);
dans laquelle le bidon (25) est prévu au-dessous du réservoir de carburant (14) et le bidon (25) ne vient pas en recouvrement avec une surface centrale (80) d'une roue arrière (20) par rapport à un sens de la largeur (X) de la motocyclette (1), lorsque vu en vue en plan;
**caractérisée par le fait que**
le bidon (25) est situé d'un côté plus intérieur que la partie extrême extérieure (14e) du réservoir de carburant (14) des deux côtés dans le sens de la largeur (X) de la motocyclette (1), et
le bidon (25) présente au moins une partie venant en recouvrement avec le réservoir de carburant (14) derrière l'extrémité avant (12a) du siège (12), lorsque vu en vue en plan.

2. Motocyclette (1) selon la revendication 1, comprenant par ailleurs:
un garde-boue arrière (22) prévu de manière à recouvrir la roue arrière (20) depuis le haut et à supporter le bidon (25) et le réservoir de carburant (14) depuis le bas,
le garde-boue arrière (22) comportant une surface inclinée (22a) s'étendant vers l'avant et vers le bas, et
le bidon (25) étant prévu incliné le long de la surface inclinée (22a).

3. Motocyclette (1) selon la revendication 2, dans laquelle le garde-boue arrière (22) comprend une partie concave (22b) s'étendant vers le haut au-dessus de la roue arrière (20), et
la surface inclinée (22a) est prévue d'un côté de la partie concave (22b) par rapport au sens de la largeur (X) de la motocyclette (1).

4. Motocyclette (1) selon la revendication 2 ou 3, dans laquelle un orifice d'entrée (25b) du bidon (25) est prévu d'un côté arrière du bidon (25).

5. Motocyclette (1) selon l'une quelconque des revendications 2 à 4, dans laquelle un orifice de décharge (25d) du bidon (25) est prévu d'un côté avant du bidon (25).

6. Motocyclette (1) selon l'une quelconque des revendications 2 à 5, dans laquelle une nervure de positionnement (22c) utilisée pour positionner le bidon (25) est prévue de manière solidaire sur la surface inclinée (22a).

7. Motocyclette (1) selon l'une quelconque des revendications 2 à 6, dans laquelle le bidon (25) est prévu sur la surface inclinée (22a) opposée à un support (40) par rapport au sens de la largeur (X) de la motocyclette (1).

8. Motocyclette (1) selon l'une quelconque des revendications 2 à 7, dans laquelle le bidon (25) est prévu entre l'extrémité avant (14a) et l'extrémité arrière (14b) du réservoir de carburant (14).

9. Motocyclette (1) selon l'une quelconque des revendications 1 à 8, comprenant par ailleurs:
un dispositif d'alimentation de carburant (30) prévu en avant de l'extrémité avant (12a) du siège (12) et au-dessous du bidon (25), pour alimenter du carburant vers le moteur (15); et
un tuyau d'alimentation de carburant (33) disposé de manière à connecter le bidon (25) et le dispositif d'alimentation de carburant (30) et un gaz combustible d'alimentation alimenté du bidon (25) vers le dispositif d'alimentation de carburant (30),
le tuyau d'alimentation de combustible (33) s'étendant vers l'avant et vers le bas.

10. Motocyclette (1) selon la revendication 9, dans laquelle le bidon (25) comprend un orifice de sortie (25c) connecté au tuyau d'alimentation de carburant (33), et
l'orifice de sortie (25c) du bidon (25) est prévu d'un côté arrière du bidon (25).

11. Motocyclette (1) selon la revendication 1, comprenant par ailleurs une soupape de commande d'admission (26) prévue dans un trajet de ventilation qui connecte le réservoir de carburant (14) et le bidon (25), pour empêcher le carburant liquide d'entrer dans le bidon (25) depuis le réservoir de carburant (14) lorsque la motocyclette (1) tombe par terre,
un orifice d'entrée de la soupape de commande d'admission (26) étant prévu au-dessous d'un orifice de ventilation (14f) du réservoir de carburant (14),
un orifice d'entrée (25b) du bidon (25) étant prévu au-dessous d'un orifice de sortie de la soupape de commande d'admission (26).

12. Motocyclette (1) selon la revendication 2, comprenant par ailleurs une soupape de commande d'admission (26) prévue dans un trajet de ventilation qui connecte le réservoir de carburant (14) et le bidon (25), pour empêcher le carburant liquide d'entrer dans le bidon (25) depuis le réservoir de carburant (14) lorsque la motocyclette (1) tombe par terre,
un orifice d'entrée de la soupape de commande d'admission (26) étant prévu au-dessous d'un orifice de ventilation (14f) du réservoir de carburant (14),
un orifice d'entrée (25b) du bidon (25) étant prévu au-dessous d'un orifice de sortie de la soupape de commande d'admission (26),
dans laquelle la soupape de commande d'admission (26) est fixée au garde-boue arrière (22).

13. Motocyclette (1) selon la revendication 12, dans laquelle le garde-boue arrière (22) est pourvu de manière solidaire d'une nervure de fixation (22d) utilisée pour fixer la soupape de commande d'admission (26).

14. Motocyclette (1) selon l'une quelconque des revendications 11. à 13, dans laquelle le bidon (25) et la soupape de commande d'admission (26) sont prévus d'un côté plus intérieur qu'une surface extérieure (4a) du châssis de siège (4).
